# DEMANDE DE BREVET EUROPEEN

(11) **EP 4 224 258 A1**
(43) Date de publication de la demande: **09.08.2023**
(21) Numéro de dépôt: 22154700.3
(22) Date de dépôt: 02.02.2022
(51) Int. Cl.: G04B 19/10, G04B 19/12, A44C 27/00

(54) **COMPOSANT D'HABILLAGE D'UNE MONTRE OU D'UN ARTICLE DE BIJOUTERIE OU DE JOAILLERIE ET PROCÉDÉ DE FABRICATION D'UN TEL COMPOSANT D'HABILLAGE**

(71) Demandeur: Montres Breguet S.A., 1344 L'Abbaye (CH)
(72) Inventeur: SCHWAB, Anthony, 2015 Areuse (CH); GERMOND, Lucien, 1429 Giez (CH); CHARVIER, Ludovic, 1147 Montricher (CH); LAUCELLA, Vincent, 1348 Le Brassus (CH)
(74) Mandataire: ICB SA

(57) **Abrégé**

L'invention concerne un composant d'habillage (10) d'une montre ou d'un article de bijouterie ou de joaillerie, comprenant un substrat (100) réalisé dans un matériau transparent, ledit substrat (100) comprenant une face interne (101) opposée à une face externe (102), le composant d'habillage (10) étant caractérisé en ce que la face interne (101) présente une structuration (103) s'étendant sur toute sa surface, ledit composant d'habillage (10) comprenant au moins une couche métallique, dite « couche métallique interne » (104), déposée sur une partie de la surface de la face interne (101), de sorte à former un décor, la ou les parties de la surface de la face interne (101) non recouvertes par la couche métallique internes (104) étant recouvertes d'un revêtement antireflet (107).

## Description

### Domaine technique de l'invention

L'invention relève du domaine de l'horlogerie, de la bijouterie ou de la joaillerie, et concerne plus particulièrement un composant d'habillage d'une montre ou d'un article de bijouterie ou de joaillerie et un procédé de fabrication d'un tel composant d'habillage.

### Arrière-plan technologique

En particulier, dans le domaine de l'horlogerie, les composants d'habillage pour montre, notamment les cadrans, présentent généralement des décors réalisés à partir de couches minces déposées à la surface d'un substrat.

Suivant leur niveau de détails notamment, ces décors peuvent être complexes à réaliser et nécessiter un niveau de précision difficilement atteignable par un travail à la main. De ce fait, l'utilisation d'outils automatisés, par exemple des moyens d'usinage à commande numérique peut alors être nécessaire pour la réalisation des décors, ce qui peut être incompatible avec la fabrication de montres de luxe, laquelle est caractérisée par la mise en œuvre de compétences de métiers d'art de sorte à obtenir des montres uniques.

Par ailleurs, il peut arriver que certaines décorations ne soient pas techniquement réalisables, même par l'utilisation d'outils automatisés, du fait de leur complexité et de la précision requise pour leur réalisation.

Dans ce cadre, la présente invention vise à simplifier la réalisation d'un composant d'habillage d'une montre, notamment d'un cadran, une glace ou une glace de fond, présentant des décors complexes.

Plus généralement, la présente invention répond à la même problématique dans le domaine de la bijouterie et de la joaillerie dans la mesure où elle vise à simplifier la réalisation d'un article de bijouterie ou de joaillerie présentant des décors complexes.

### Résumé de l'invention

L'invention résout les inconvénients précités et concerne, à cet effet, un composant d'habillage d'une montre ou d'un article de bijouterie ou de joaillerie, comprenant un substrat réalisé dans un matériau transparent, ledit substrat comprenant une face interne opposée à une face externe. L'une des faces interne ou externe présente une structuration s'étendant sur toute sa surface, ledit composant d'habillage comprenant au moins une couche métallique déposée sur une partie de la structuration, de sorte à former un décor, la ou les parties de la structuration non recouvertes par la couche métallique internes étant recouvertes d'un revêtement antireflet.

L'invention permet la réalisation de la structuration par toute méthode adaptée à générer des reliefs ou aspérités sur la surface de la face interne. En effet, le revêtement antireflet a pour effet d'annihiler l'aspect visuel de la structuration présente sur la ou les parties de la surface de la face interne non recouvertes par la couche métallique, ce qui autorise la réalisation de structuration à la main par exemple.

Plus précisément, il est recherché par la présente invention de masquer la structuration éventuelle de la face interne sur la ou les parties de sa surface qui ne sont pas recouvertes par la couche métallique, de sorte que seule la couche métallique, qui est visible par transparence à travers le substrat, présente un aspect texturé. Autrement dit, l'invention permet de garantir la transparence de l'ensemble du composant d'habillage, à l'exception des couches métalliques. On comprend ainsi que l'invention autorise une grande liberté dans la réalisation de la structuration.

La structuration a pour but de diminuer la réflexion de la lumière, en particulier la réflexion spéculaire, provoquée par la couche métallique, afin de rendre ladite réflexion plus diffuse.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, la face interne comporte la structuration sur l'ensemble de sa surface, et comporte la couche métallique, dite « couche métallique interne ».

Dans des modes particuliers de réalisation, la face externe du substrat est polie.

Dans des modes particuliers de réalisation, le composant d'habillage comprend au moins une couche métallique, dite « couche métallique externe », déposée sur une partie de la surface de la face externe du substrat, ladite couche métallique externe étant recouverte d'un revêtement antireflet recouvrant ladite face externe ou étant déposée sur ledit revêtement antireflet recouvrant ladite face externe.

Dans des modes particuliers de réalisation, la couche métallique interne est recouverte par le revêtement antireflet.

Selon un autre aspect, la présente invention concerne un cadran, une glace ou une glace de fond de montre formé par un composant d'habillage tel que précédemment décrit.

Encore selon un autre aspect, la présente invention concerne un procédé de fabrication d'un composant d'habillage d'une montre ou d'un article de bijouterie ou de joaillerie comprenant les étapes suivantes :
- structuration de toute la surface d'une face interne d'un substrat de sorte à générer une structuration,
- dépôt d'au moins une couche métallique dite « couche métallique interne » sur une partie de la surface de la face interne, de sorte à former un décor,
- dépôt d'un revêtement antireflet sur la face interne du substrat, au moins sur la ou les parties de la faces interne du substrat non recouvertes par la couche métallique interne.

Dans des modes particuliers de mise en œuvre, le procédé comporte une étape de dépôt d'une couche métallique dite « couche métallique externe » sur une partie de la face externe du substrat, de sorte à former un décor, ladite étape de dépôt étant réalisée avant ou après une étape de dépôt d'un revêtement antireflet sur la face externe.

Dans des modes particuliers de mise en œuvre, la face externe est polie lors d'une étape préliminaire de polissage.

Dans des modes particuliers de mise en œuvre, lors de l'étape de dépôt de revêtement antireflet, la couche métallique interne est recouverte par le revêtement antireflet.

Dans des modes particuliers de mise en œuvre, l'étape de structuration est mise en œuvre par usinage laser ou par usinage mécanique.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en perspective d'un composant d'habillage d'une montre selon un exemple préféré de réalisation de l'invention ;
- la figure 2 représente schématiquement une vue en coupe transversale du composant d'habillage selon la figure 1 selon un exemple préféré de réalisation de l'invention ;
- la figure 3 représente schématiquement une vue en coupe transversale du composant d'habillage de la figure 1 selon un autre exemple de réalisation de l'invention ;
- la figure 4 représente schématiquement une vue en coupe transversale du composant d'habillage de la figure 1 selon encore un autre exemple de réalisation de l'invention.

### Description détaillée de l'invention

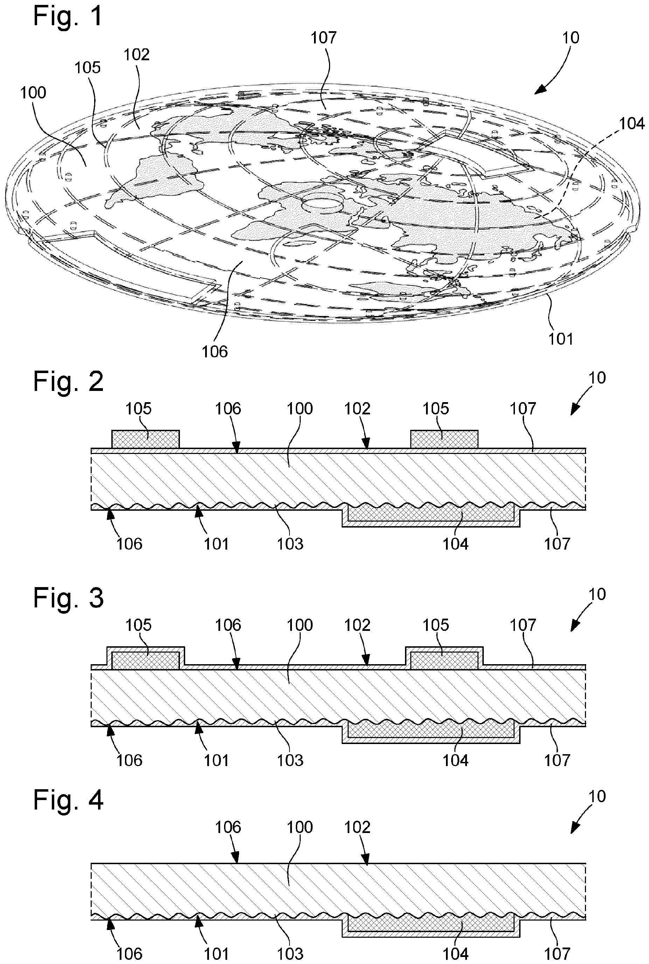

La présente invention concerne un composant d'habillage 10 d'une montre ou d'un article de bijouterie ou de joaillerie, tel que représenté sur les figures 1 à 4 dans des exemples de réalisation.

Le composant d'habillage 10 comprend un substrat 100 réalisé dans un matériau transparent, tel qu'en saphir ou en verre. Le substrat 100 est transparent dans le sens où il laisse passer la lumière dont la longueur d'onde est au moins située dans le spectre visible. Le substrat 100 présente une face interne 101 opposée à une face externe 102.

Dans un exemple préféré d'application de l'invention, le composant d'habillage 10 forme un cadran, une glace ou une glace de fond d'une montre. La face interne 101 est alors destinée à être agencée en regard d'un mouvement horloger et la face externe 102 est destinée à être agencée en vis-à-vis d'une glace de montre.

Avantageusement, la face interne 101 ou la face externe 102 présente une structuration 103 sur toute sa surface.

Préférentiellement, comme visible schématiquement sur les figures 2 à 4 dans des exemples de réalisation, la face interne 101 présente la structuration 103. La structuration 103 peut être réalisée par toute opération d'enlèvement de matière consistant à générer des reliefs ou aspérités sur la surface de la face interne 101 par exemple par gravure, guillochage, etc., à la main par un opérateur qualifié, ou par usinage mécanique, chimique, laser, etc. Par conséquent, la structuration 103 peut consister en une gravure, un guillochage, un satinage, etc., de la face interne 101.

La structuration 103 de la face interne 101 s'étend sur l'ensemble de sa surface, de sorte à simplifier l'opération de structuration.

Par ailleurs, afin d'augmenter la transparence du substrat 100, la face externe 102 peut être polie préférentiellement sur l'ensemble de sa surface.

Le composant d'habillage 10 comprend, sur au moins une partie de la surface de la face interne 101, au moins une couche métallique déposée de sorte à former un décor. Dans la présente demande, il est décrit des exemples de réalisation dans lesquels le composant d'habillage comporte, sur la surface de la face interne 101, un décor formé par une unique couche métallique. Bien entendu, dans d'autres exemples de réalisation de l'invention non décrits, plusieurs couches métalliques peuvent être superposées ou juxtaposées sur ladite surface de la face interne 101.

Plus précisément, la couche métallique est déposée de sorte à matérialiser une représentation graphique formant un décor. La couche métallique peut être réalisée à partir de tout matériau métallique ou de tout alliage de matériau métallique ou de tout oxyde de matériau métallique.

Par exemple, la couche métallique peut être réalisée en oxyde de chrome ou en chrome, en palladium, en or, en argent, etc.

Dans les exemples de réalisation représentés sur les figures 1 à 3, la face externe 102 présente également, sur une partie de sa surface, au moins une couche métallique formant un décor. Dans la présente demande, il est décrit des exemples de réalisation dans lesquels le composant d'habillage comporte, sur la surface de la face externe 102, un décor formé par une unique couche métallique. Bien entendu, dans d'autres exemples de réalisation de l'invention non décrits, plusieurs couches métalliques peuvent être superposées ou juxtaposées sur ladite surface de la face externe 102.

Dans la suite du texte, la couche métallique déposée sur la face interne 101 du substrat 100 est appelée « couche métallique interne » 104, et la couche métallique déposée sur la face externe 102 du substrat 100 est appelée « couche métallique externe » 105.

Un exemple de décor formé par les couches métalliques interne 104 et externe 105 est représenté sur vue en perspective de la figure 1.

En outre, la ou les parties de la surface des faces interne 101 et externe 102 du substrat 100 qui ne sont pas recouvertes respectivement par les couches métalliques interne 104 et externe 105 sont appelées « zones libres » 106 dans le présent texte.

Avantageusement, toute ou partie de la couche métallique interne 104 est visible pour un utilisateur, de même que la structuration 103 de la face interne 101 sur la partie de la surface que ladite couche métallique interne 104 recouvre. Ainsi, grâce à la structuration 103, la couche métallique interne 104 présente un aspect visuel texturé (non représenté sur la figure 1 pour des raisons de clarté de la figure) selon les reliefs ou les aspérités de ladite structuration 103.

Le dépôt de ces couches métalliques interne 104 et externe 105 respectivement sur les faces interne 101 et externe 102 du substrat 100 permet de générer simplement des décors riches. Plus particulièrement, cette caractéristique permet d'ajouter un effet de profondeur entre les deux couches métalliques, et donc un effet de profondeur au décor, ledit effet de profondeur étant proportionnel à l'épaisseur du substrat dans la mesure où cette distance sépare les deux couches métalliques interne 104 et externe 105 l'une de l'autre.

Comme représenté schématiquement sur la vue en coupe des figures 2 à 4, le composant d'habillage 10 comporte un revêtement antireflet 107 recouvrant la totalité des zones libres 106 de la face interne 101. Préférentiellement, comme illustré sur les exemples de réalisation des figures 2 à 4, le revêtement antireflet s'étend également sur l'ensemble de la face externe 102. En particulier, la couche métallique externe 105 est, soit déposée sur ledit revêtement antireflet 107, comme le montre la figure 2, soit recouverte par le revêtement antireflet 107, comme le montre la figure 3.

Il est à noter qu'il est envisageable de ne déposer le revêtement antireflet que sur une surface choisie, telle que sur les zones libres 106 des ou de l'une des faces interne 101 et externe 102.

Comme le montre la figure 4, il est également envisageable que la surface externe 105 ne comporte pas de revêtement antireflet 107 et/ou de couche métallique. En d'autres termes, la surface externe peut comporter un revêtement antireflet 107, mais pas de couche métallique, ou peut comporter une couche métallique, mais pas de revêtement antireflet 107, ou peut ne pas comporter de couche métallique, ni de revêtement antireflet 107.

Le revêtement antireflet 107 peut être du même type que ceux utilisés pour les glaces de montres, qui est bien connus de l'homme du métier.

Avantageusement, le revêtement antireflet 107 a pour effet d'annihiler l'aspect visuel de la structuration 103 présente sur les zones libres 106 de la face interne 101 du substrat 100. En d'autres termes, le revêtement antireflet 107, lorsqu'il est déposé sur la structuration 103 comme représenté sur la figure 2, génère un effet optique consistant à rendre la structuration 103 invisible à l'œil nu, et par conséquent à rendre le substrat 100 uniformément transparent au niveau des zones libres 106, de la même manière que si la face interne 101 avait été polie à cet endroit.

Un composant d'habillage 10 tel que précédemment décrit peut être réalisé par la mise en œuvre des étapes suivantes d'un procédé de fabrication :
- structuration de toute la surface de la face interne 101 du substrat 100, de sorte à générer une structuration 103,
- dépôt d'au moins la couche métallique interne 104, et de sorte à former un décor, sur une partie de la face interne 101 ; dans un exemple de réalisation de l'invention, cette étape peut comporter une autre opération de dépôt de couche métallique consistant à déposer la couche métallique externe 105 sur une partie de la face externe 102 du substrat 100,
- dépôt du revêtement antireflet 107 au moins sur les zones libres 106 de la faces interne 101, c'est-à-dire les portions de la face interne 101 non recouvertes par la couche métallique. Préférentiellement, la couche de revêtement antireflet 107 est également déposé sur la couche métallique interne 104.

Avantageusement, dans un exemple de réalisation de l'invention, un revêtement antireflet 107 peut être déposé, soit sur l'ensemble de la surface de la face externe 102, l'éventuelle couche métallique externe 105 étant alors déposée sur ledit revêtement antireflet 107 de la face externe 102, comme le montre la figure 2, soit sur la couche métallique externe 105 ainsi que sur les zones libres 106 de la face externe 102, comme le montre la figure 3.

La couche métallique interne 104 et l'éventuelle couche métallique externe 105 sont préférentiellement déposées par une méthode de dépôt physique en phase vapeur, également connu sous l'acronyme « PVD » (pour « Physical Vapor Déposition » en langue anglaise).

Le ou les revêtements antireflets 107 sont préférentiellement déposés par une méthode de dépôt physique en phase vapeur assisté par plasma.

Il y a lieu de noter que, dans les exemples de réalisation représentés sur les figures 2 et 3, la chronologie de la réalisation des dépôts des couches métalliques interne 104 et externe 105 l'une par rapport à l'autre est sans importance, de la même manière que celle de la réalisation des dépôts des revêtements antireflets 107 l'un par rapport à l'autre.

Avantageusement, la face externe 102 est polie lors d'une étape préliminaire de polissage réalisée avant ou immédiatement après la mise en œuvre de l'étape de structuration.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, dans d'autres exemples de réalisation de l'invention, il y a lieu de noter que l'ensemble des dispositions relatives à la face interne 101, à la couche métallique interne 104 et à la structuration 103 décrites ci-dessus peuvent s'appliquer de manière analogue, à la face externe 102, à la couche métallique externe 105 et à une éventuelle structuration de ladite face externe 102.

## Revendications

1. Composant d'habillage (10) d'une montre ou d'un article de bijouterie ou de joaillerie, comprenant un substrat (100) réalisé dans un matériau transparent, ledit substrat (100) comprenant une face interne (101) opposée à une face externe (102), le composant d'habillage (10) étant **caractérisé en ce que** l'une des faces interne (101) ou externe (102) présente une structuration (103) s'étendant sur toute sa surface, ledit composant d'habillage (10) comprenant au moins une couche métallique déposée sur une partie de la structuration (103), de sorte à former un décor, la ou les parties de la structuration (103) non recouvertes par la couche métallique internes (104) étant recouvertes d'un revêtement antireflet (107).

2. Composant d'habillage (10) selon la revendication 1, dans lequel la face interne (101) comporte la structuration (103) sur l'ensemble de sa surface, et comporte la couche métallique, dite « couche métallique interne » (104).

3. Composant d'habillage (10) selon la revendication 2, dans lequel la face externe (102) du substrat (100) est polie.

4. Composant d'habillage (10) selon la revendication 2 ou 3, comprenant au moins une couche métallique, dite « couche métallique externe » (105), déposée sur une partie de la surface de la face externe (102) du substrat (100), ladite couche métallique externe (105) étant recouverte d'un revêtement antireflet (107) recouvrant ladite face externe (102) ou étant déposée sur ledit revêtement antireflet (107) recouvrant ladite face externe (102).

5. Composant d'habillage (10) selon l'une des revendications 2 à 4, dans lequel la couche métallique interne (104) est recouverte par le revêtement antireflet (107).

6. Cadran de montre **caractérisé en ce qu'**il est formé par un composant d'habillage (10) selon l'une des revendications 1 à 5.

7. Procédé de fabrication d'un composant d'habillage (10) d'une montre ou d'un article de bijouterie ou de joaillerie comprenant les étapes suivantes :
- structuration de toute la surface d'une face interne (101) d'un substrat (100) de sorte à générer une structuration (103),
- dépôt d'au moins une couche métallique dite « couche métallique interne » (104) sur une partie de la surface de la face interne (101), de sorte à former un décor,
- dépôt d'un revêtement antireflet (107) sur la face interne (101) du substrat (100), au moins sur la ou les parties de la faces interne du substrat (100) non recouvertes par la couche métallique interne (104).

8. Procédé de fabrication selon la revendication 7, comportant une étape de dépôt d'une couche métallique dite « couche métallique externe » (105), sur une partie de la face externe (102) du substrat (100), de sorte à former un décor, ladite étape de dépôt étant réalisée avant ou après une étape de dépôt d'un revêtement antireflet (107) sur la face externe (102).

9. Procédé de fabrication selon la revendication 7 ou 8, dans lequel la face externe (102) est polie lors d'une étape préliminaire de polissage.

10. Procédé de fabrication selon la revendication 8 ou 9, dans lequel, lors de l'étape de dépôt de revêtement antireflet (107), la couche métallique interne (104) est recouverte par le revêtement antireflet (107).

11. Procédé de fabrication selon la revendication 10, dans lequel l'étape de structuration est mise en œuvre par usinage laser ou par usinage mécanique.
